# EUROPÄISCHE PATENTSCHRIFT

(11) **EP 3 123 855 B1**
(45) Veröffentlichungstag und Bekanntmachung des Hinweises auf die Patenterteilung: **15.01.2020**
(21) Anmeldenummer: 16172062.8
(22) Anmeldetag: 31.05.2016
(51) Int. Cl.: A01D 57/03

(54) **ERNTEGUTBERGUNGSEINRICHTUNG**
CROP HARVESTING HEADER
TABLIER DE COUPE

(30) Priorität: 31.07.2015 DE 102015112580
(43) Veröffentlichungstag der Anmeldung: 01.02.2017
(73) Patentinhaber: CLAAS Hungaria Kft., 5200 Törökszentmiklós (HU)
(72) Erfinder: Szakallas, Tibor, 2750 Nagykörös (HU); Tillmann, Balazs, 5000 Szolnok (HU); Lorincz, Gyorgy, 5000 Szolnok (HU); Dudler, Heribert, 33428 Harsewinkel (DE); Liedmeier, Stefan, 49479 Ibbenbüren (DE); Füchtling, Christian, 48317 Drensteinfurt (DE); Thiesmann, Waldemar, 49080 Osnabrück (DE)
(74) Vertreter: CLAAS Gruppe

(56) Entgegenhaltungen:
- EP-A1- 1 048 199
- EP-A1- 2 529 613
- WO-A1-2014/100105
- US-A- 5 987 861
- US-A1- 2002 148 210

## Beschreibung

Die Erfindung betrifft eine Erntegutbergungseinrichtung, insbesondere ein Schneidwerk, mit zumindest einer rotierend angetriebenen Haspel, welche sich über die Breite der Haspel erstreckende drehbare Zinkenträger aufweist, die Förderzinken tragen, sowie mit einer Einstellvorrichtung, mit der die Drehstellung der Zinkenträger in Abhängigkeit von der Drehstellung der Haspel einstellbar ist.

Eine Erntegutbergungseinrichtung, insbesondere ein Schneidwerk, dient der Aufnahme von stängeligem Erntegut von einem Feld, um es der Weiterverarbeitung durch eine Erntemaschine wie einen Mähdrescher zuzuführen. Hierzu wird das auf dem Feld stehende Erntegut von einer Schneidvorrichtung der Erntegutbergungseinrichtung abgeschnitten. Die Aufnahme des abgeschnitten Erntegutes durch die Erntegutbergungseinrichtung wird in erheblichem Maße durch die Wirkung zumindest einer sich über die Breite der Erntegutbergungseinrichtung erstreckenden Haspel beeinflusst. Die im Wesentlichen aus Tragsternen und aus mit Förderzinken versehenen Zinkenträgern bestehende Haspel rotiert um ihre Längsachse, wobei die lotrecht oder unter einem Winkel zur Lotrechten gerichteten Förderzinken in das Erntegut eingreifen. Die Haspel ist im Hinblick auf die unterschiedlichen Arten von Erntegut und dessen Zustand, beispielsweise stehendes oder liegendes Erntegut, verstellbar, um die Gutannahme durch die Erntegutbergungseinrichtung zu verbessern. Dies geschieht durch eine Variation der Neigung der Förderzinken relativ zum Boden, welche mittels einer Einstellvorrichtung, mit der die Drehstellung der Zinkenträger in Abhängigkeit von der Drehstellung der Haspel einstellbar ist.

Aus der EP 1 297 735 B1 ist eine Erntegutbergungseinrichtung der eingangs genannten Art bekannt, welche zum Zweck der Einstellung der Förderzinken eine einteilige, geschlossene Kurvenbahnstruktur aufweist, welche als Kulissensteuerung fungiert. In einem Kanal der geschlossenen Kurvenbahnstruktur ist ein Kurvenbahnabnehmer geführt, welcher die Drehstellung des Zinkenträgers und damit die Neigung der Zinken relativ zum Boden während einer Umdrehung der Haspel steuert. Ein Nachteil dieser Erntegutbergungseinrichtung ist die fehlende Möglichkeit, die Kurvenbahnstruktur an unterschiedliche Bedingungen anpassen zu können.

Aus der US 2002/0148210 A1 ist eine Erntegutbergungseinrichtung bekannt, die eine aus mehreren Segmenten gebildete geschlossene, endlose Kurvenbahnstruktur aufweist, welche als Kulissensteuerung fungiert. Die Segmente stoßen mit ihren endseitigen radialen Stirnflächen bündig aneinander. Die Segmente sind an ihren Enden durch Verbindungsmittel miteinander verbunden, um die geschlossene, endlose Kurvenbahn zu bilden.

Aus der EP 2 529 613 A1 ist eine Erntegutbergungseinrichtung bekannt, welche eine geschlossene, endlose Kurvenbahnstruktur aufweist.

Aus der EP 1 048 199 A1 ist eine Erntegutbergungseinrichtung bekannt, welche eine aus Segmenten gebildete geschlossene, endlose Kurvenbahnstruktur aufweist. Die einzelnen Segmente sind an ihren Enden mit radialen Befestigungsflanschen versehen, um diese an ihren Enden bündig miteinander zu verbinden, so dass die Kurvenbahn einen unterbrechungsfreien Verlauf aufweist.

Es ist die Aufgabe der vorliegenden Erfindung eine Erntegutbergungseinrichtung derart weiterzuentwickeln, dass diese eine einfache und kostengünstige Anpassung der Charakteristik der Kurvenbahnstruktur ermöglicht.

Diese Aufgabe wird erfindungsgemäß durch die Merkmale des Anspruches 1 gelöst.

Vorteilhafte Weiterbildungen sind Gegenstand der Unteransprüche.

Gemäß dem Anspruch 1 wird vorgeschlagen, dass die Erntegutbergungseinrichtung mit zumindest einer rotierend angetriebenen Haspel, welche mehrere auf einer Haspelwelle mit Abstand zueinander angeordnete Tragsterne sowie sich über die Breite der Haspel erstreckende drehbare Zinkenträger aufweist, die Förderzinken tragen, und mit einer Einstellvorrichtung, mit der die Drehstellung der Zinkenträger in Abhängigkeit von der Drehstellung der Haspel einstellbar ist. Hierzu umfasst die Einstellvorrichtung eine zumindest aus zwei Kurvenbahnsegmenten bestehende, abschnittsweise offene Kurvenbahnstruktur, in der die Drehstellung des Zinkenträgers steuernde Kurvenbahnabnehmer geführt sind, wobei zumindest eines der Kurvenbahnsegmente lösbar angeordnet ist. Durch die lösbare Anordnung zumindest eines der Kurvenbahnsegmente ist ein einfacher Austausch desselben möglich, um eine schnelle Anpassung an andere Erntebedingungen, wie eine geänderte Fruchtart, zu ermöglichen. Zudem bietet die Austauschbarkeit des zumindest einen Kurvenbahnsegmentes den Vorteil dieses im Bedarfsfall schnell und kostengünstig ersetzen zu können. Die Unterbrechungszeiten können somit sehr gering gehalten werden. Die Kurvenbahnsegmente können an jeweils einer den äußersten Tragsternen benachbart angeordneten Abdeckplatte lösbar befestigt sein, wobei die an der Abdeckplatte befestigten Kurvenbahnsegmente den Tragsternen zugewandt sind. Dazu weisen die zumindest zwei Kurvenbahnsegmente in Umfangsrichtung der Kurvenbahnstruktur zumindest eine die Kurvenbahnstruktur unterbrechende Beabstandung zueinander auf. Die teilweise in Umfangsrichtung gesehen offene Ausführung der Kurvenbahnstruktur vereinfacht das Handling bei einem Austausch eines der Kurvenbahnsegmente, da diese in ihren einander gegenüberliegenden Endbereichen nicht bündig miteinander abschließen müssen, wie es bei einer geschlossen Kurvenbahnstruktur gemäß der EP 1 297 735 B1 oder der US 2002/0148210 A1 der Fall ist.

Besonders vorteilhaft ist es, dass die zumindest zwei Kurvenbahnsegmente jeweils als ein Flachprofil ausgeführt sein können, wobei Innenseite und Außenseite des jeweiligen Kurvenbahnsegmentes der Führung der Kurvenbahnabnehmer dienen. Derartige, als Flachprofile ausgebildete Kurvenbahnsegmente haben den Vorteil, dass sie deutlich einfacher herzustellen sind, als geschlossene, einteilige Kurvenbahnsegmente, die mit einer Kulissensteuerung ausgestattet sind. Zudem ermöglicht diese Ausführung der Kurvenbahnsegmente eine gegenüber dem Stand der Technik flachere, bauraumreduzierte Bauweise. Ein weiterer Vorteil der Ausführung der Kurvenbahnsegmente als Flachprofile ergibt sich aus einem gegenüber dem Stand der Technik verringertem Wartungsaufwand, da auf Grund des Verzichts auf einen Kanal, in dem die Kurvenabnehmer geführt sind, die Gefahr eines Verstopfens des Kanals nicht gegeben ist.

Insbesondere kann der eine Kurvenbahnabnehmer auf der Innenseite des jeweiligen Kurvenbahnsegmentes umlaufen und der andere Kurvenbahnabnehmer auf der Außenseite des jeweiligen Kurvenbahnsegmentes. Durch die beidseitige Abstützung der Kurvenbahnabnehmer an dem jeweiligen Kurvenbahnsegment ist die mechanische Belastung desselben geringer als bei der Lösung gemäß dem Stand der Technik, wo lediglich jeweils ein die Drehstellung des Zinkenträgers steuernder Kurvenbahnabnehmer im Inneren des Kanals der Kurvenbahnstruktur umläuft.

Vorzugsweise sollten im Bereich einer Beabstandung zweier Kurvenbahnsegmente jeweils paarweise, in radialem Abstand zu den Kurvenbahnsegmenten angeordnete innere Führungselemente und äußere Führungselemente vorgesehen sein. Diese inneren und äußeren Führungselemente tragen zu einem stabilen und sicher geführten Umlauf der Kurvenbahnabnehmer in dem Bereich einer Beabstandung zweier Kurvenbahnsegmente bei.

Hierbei sollten die inneren und äußeren Führungselemente in Umfangsrichtung eine Erstreckung aufweisen, die größer ist, als die Beabstandung zwischen zwei Kurvenbahnsegmenten. Die vollständige Überdeckung der Beabstandung in Umfangsrichtung der Kurvenbahnsegmente sorgt für einen sicheren Übergang der Kurvenbahnabnehmer von dem einen Kurvenbahnsegment zu dem nachfolgenden. Ein Verkanten oder Verklemmen der umlaufenden Kurvenbahnabnehmer kann hierdurch vermieden werden. Die inneren und äußeren Führungselemente können ebenfalls an der jeweiligen Abdeckplatte angeordnet.

Bevorzugt können die Kurvenbahnabnehmer an einer Hebelanordnung angeordnet sein, die an einem als Steuerstern ausgeführten Tragstern schwenkbar gelagert ist. Mittels der Hebelanordnung kann auf den Zinkenträger eingewirkt und die Drehstellung definiert werden. Der Steuerstern ist der Abdeckplatte benachbart angeordnet.

Hierzu kann die Hebelanordnung einen ersten Hebelarm umfassen, welcher mittels der an diesem angeordneten Kurvenbahnabnehmer entlang der Kurvenbahnsegmente geführt ist. Der erste Hebelarm kann sich dabei im Wesentlichen in radialer Richtung der Haspel nach außen erstrecken.

Vorzugsweise können die Kurvenbahnabnehmer als zwei Rollen ausgebildet sind, die in Längsrichtung des ersten Hebelarmes gesehen diametral an diesem angeordnet sind. Die jeweilige Rolle ist dabei um eine zur Oberfläche des ersten Hebelarmes senkrecht verlaufende Achse drehbar gelagert.

Dabei kann die eine Rolle auf der Innenseite des jeweiligen Kurvenbahnsegmentes umlaufen und die andere Rolle auf der Außenseite des jeweiligen Kurvenbahnsegmentes. Auf Grund des gekrümmten Verlaufes der Kurvenbahnsegmente verändert sich die Neigung des ersten Hebelarmes während eines vollständigen Umlaufs auf der Kurvenbahn. Mit der Neigungsänderung des ersten Hebelarmes verändert sich auch die relative Position der an dem ersten Hebelarm angeordneten Rollen zueinander, so dass die auf der Innenseite umlaufende Rolle der auf der Außenseite umlaufenden Rolle abschnittsweise vorauseilen kann.

Insbesondere kann die Hebelanordnung einen zweiten Hebelarm umfassen, welcher mit einem Ende an dem Steuerstern schwenkbar angelenkt ist und mit seinem anderen Ende an dem ersten Hebelarm. Dabei kann der zweite Hebelarm an einer eine der Rollen tragenden Achsen des ersten Hebelarmes angelenkt sein. Vorzugsweise ist der zweite Hebelarm an der Achse der Rolle angelenkt, welche auf der Außenseite des jeweiligen Kurvenbahnsegmentes umläuft beziehungsweise abrollt.

Des Weiteren sollte die radiale Beabstandung der inneren Führungselemente und der äußeren Führungselemente zumindest dem Abstand der diametral angeordneten Rollen entsprechen. Ein zwischen dem inneren Führungselement einerseits beziehungsweise dem äußeren Führungselement andererseits und den Rollen auftretendes Spiel solle so gewählt werden, dass es nicht zu einem Schlagen der Rollen gegen eines der Führungselemente kommt. Ein Drehstellungswechsel durch ein Umschlagen der von den Rollen geführten Hebelanordnung wird ebenfalls vermieden.

Insbesondere kann ein Kurbelarm vorgesehen ist, welcher mit einem Ende an einem freien Ende des ersten Hebelarmes schwenkbar angelenkt ist und mit seinem anderen Ende mit dem Zinkenträger drehfest verbunden ist. Dabei sind der Zinkenträger und der daran befestigte Kurbelarm um eine gemeinsame Achse drehbar gelagert.

Die vorliegende Erfindung wird nachstehend anhand eines in den Zeichnungen dargestellten Ausführungsbeispieles näher erläutert.

Es zeigen:
- Fig. 1: eine schematisierte Seitenansicht eines selbstfahrenden Mähdreschers;
- Fig.2: ein Ausschnitt einer Haspel in einer perspektivischen Ansicht;
- Fig. 3: eine Detailansicht eines Steuersterns der Haspel gemäß Fig. 2.

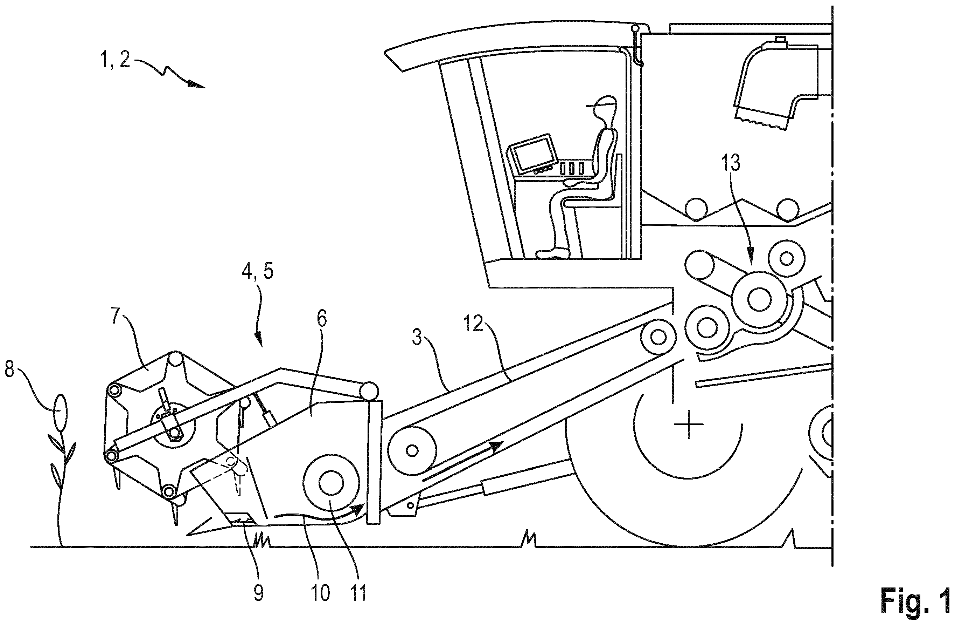

In Fig.1 ist eine als selbstfahrender Mähdrescher 1 ausgeführte landwirtschaftliche Arbeitsmaschine 2 in der Seitenansicht während der Erntefahrt dargestellt. Frontseitig weist der Mähdrescher 1 einen vertikal schwenkbaren Einzugsschacht 3 auf, an dem eine als Schneidwerk 4 ausgeführter Erntegutbergungseinrichtung 5 angeordnet ist. Mit dem schwenkbaren Einzugsschacht 3 ist das Schneidwerk 4 auf eine gewünschte Schneidwerkshöhe einstellbar. Das Schneidwerk 4 besteht aus einem Schneidtisch 6 und aus einer an dem Schneidtisch 6 befestigten, rotierend angetriebenen Haspel 7. Die Haspel 7 ist gegenüber dem Schneidtisch 6 sowohl in der Höhe als auch in horizontaler Richtung verstellbar. Zu erntendes Erntegut 8 wird mit einem an der vorderen Kante des Schneidtischs 6 angeordneten Messerbalken 9 abgeschnitten und das geschnittene Erntegut 10 anschließend mit Hilfe der Haspel 7 zu einer im Schneidtisch 6 angeordneten, rotierend angetriebenen Einzugsschnecke 11 gefördert. Die Einzugsschnecke 11 führt das geschnittene Erntegut 10 dem Einzugsschacht 3 zu. In dem Einzugsschacht 3 läuft ein Schrägförderer 12 um, welcher das geschnittene Erntegut 10 an ein Dreschwerk 13 des Mähdreschers 1 übergibt. Als Alternative hierzu kann das Schneidwerk als sogenanntes Bandschneidwerk ausgeführt sein, welches für die Förderung des geschnittenen Erntegutes endlos umlaufende Förderbänder verwendet.

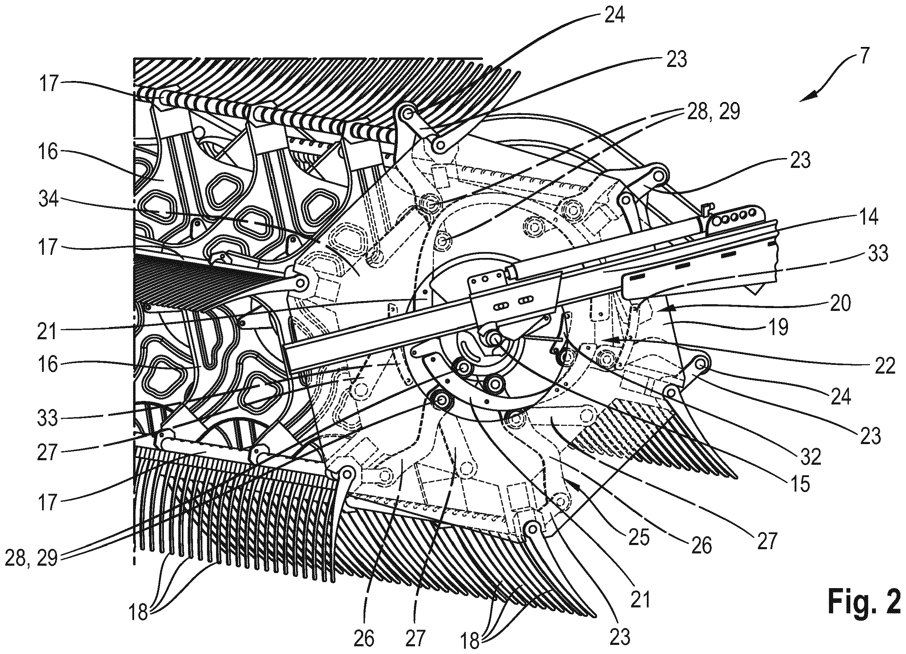

In Fig. 2 ist ein Ausschnitt der Haspel 7 in einer perspektivischen Ansicht dargestellt. Die Haspel 7 ist durch zwei an dem Schneidwerk 4 angeordnete Tragarme 14 mit diesem verbunden, von denen nur in Fig. 2 dargestellt ist. Die Haspel 7 umfasst eine Haspelwelle 15, auf welcher in gleichmäßigem Abstand Tragsterne 16 koaxial zueinander angeordnet sind. Über den Umfang der Tragsterne 16 sind in Lagern drehbar beziehungsweise schwenkbar mehrere Zinkenträger 17 angeordnet, die sich durchgehend über die gesamte Breite der Haspel 7 erstrecken. An diesen Zinkenträgern 17 sind mehrere Förderzinken 18 gleichmäßig beabstandet angeordnet, die fest mit dem jeweiligen Zinkenträger 17 verbunden sind. Damit die Zinkenträger 17 mit den daran starr angebrachten Förderzinken 18 beim Umlauf der Haspel 7 verschwenken, sind die Zinkenträger 17 an einem als Steuerstern 19 ausgebildeten Tragstern gekoppelt. Es ist jeweils ein Steuerstern 19 endseitig auf der dem jeweiligen Tragarm 14 zugewandten Außenseite der Haspelwelle 15 montiert.

Der Schwenkwinkel jedes Zinkenträgers 17 und damit die Ausrichtung der an dem jeweiligen Zinkenträger 17 befestigten Förderzinken 18 ist abhängig von dem momentanen Drehwinkel beziehungsweise der momentanen Drehstellung der Haspel 7. Um die Bewegungsbahn der Förderzinken 18 und damit ihre jeweils zu einem bestimmten Drehwinkel der Haspel 7 zugehörige Ausrichtung zu verändern, ist dem Steuerstern 19 eine Einstellvorrichtung 20 zugeordnet. Je nach dem, mit welcher Neigung die Förderzinken 18 in das Erntegut 8 eingreifen beziehungsweise aus dem Erntegut herausgleiten, wird die Effektivität der Förderung des Ernteguts 8 durch die Förderzinken 18 beeinflusst.

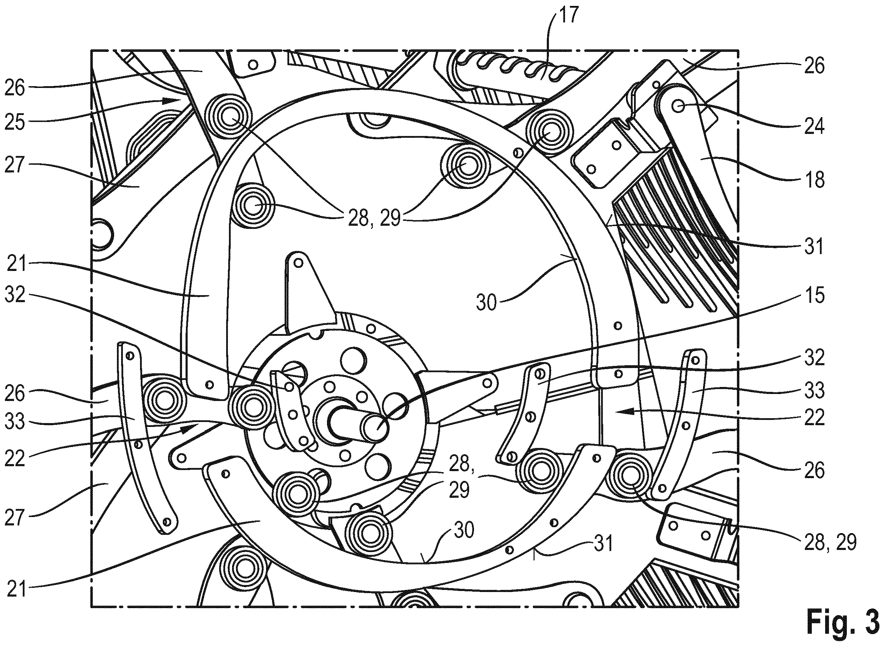

Die Einstellvorrichtung 20 umfasst zumindest zwei Kurvenbahnsegmente 21, die eine Kurvenbahnstruktur zur Steuerung der Drehstellung des jeweiligen Zinkenträgers 17 bilden. Die Kurvenbahnsegmente 21 sind radial zu der Haspelwelle 15 beabstandet dem Steuerstern 19 zugeordnet. Die Kurvenbahnsegmente 21 sind vorzugsweise als Flachprofile ausgeführt. Zur Herstellung der Kurvenbahnsegmente 21 kommen Materialien wie Kunststoff oder Metall in Frage, die auch in einer beliebigen Kombination verwendet werden können. Die Kurvenbahnstruktur ist in Umfangsrichtung gesehen abschnittsweise offen ausgeführt, was durch eine Beabstandung 22 der beiden Kurvenbahnsegmente 21 an zumindest einer Stelle erreicht wird. In dem dargestellten Ausführungsbeispiel ist die Kurvenbahnstruktur an zwei Stellen durch jeweils eine Beabstandung 22 zwischen den Kurvenbahnsegmenten 21 unterbrochen, wie in Fig. 3 dargestellt ist. Die Kurvenbahnsegmente 21 sind an einer Abdeckplatte 34 lösbar befestigt, deren Umriss in Fig. 2 strichliniert dargestellt ist. Die Abdeckplatte 34 ist auf der dem jeweiligen Tragarme 14 zugewandten Seite koaxial zu der Haspelwelle 15 an dem Schneidwerk 4 lösbar befestigt.

An den gegenüberliegenden Enden der Zinkenträgern 17 ist jeweils ein Kurbelarm 23 drehfest an diesen angeordnet. Die Kurbelarme 23 drehen sich gemeinsam mit dem jeweiligen Zinkenträger 17 um eine Achse 24. An dem freien Ende des jeweiligen Kurbelarmes 23 greift eine Hebelanordnung 25 an. Die Hebelanordnung 25 umfasst Kurvenbahnabnehmer 28, welche dem Verlauf der durch die Form der Kurvenbahnsegmente 22 vorgegebenen Kurvenbahnstruktur folgen und dabei auf die Hebelanordnung 25 übertragen. Dabei dienen Innenseiten 30 beziehungsweise Außenseiten 31 der Kurvenbahnsegmente 22 der Führung der Kurvenbahnabnehmer 28 und damit der Steuerung der Stellung der Förderzinken 18. Im Gegensatz zu der vorgeschlagenen Lösung dazu benötigt die aus dem Stand der Technik gemäß der EP 1 297 735 B1 bekannte, als Kulissenführung ausgebildete Kurvenbahnstruktur zur Einstellung der Drehstellung der Zinkenträger eine geschlossene Kurvenbahn, um die Kurvenbahnabnehmer im Inneren der Kulisse führen zu können. Diese Ausgestaltung gemäß dem Stand der Technik führt jedoch zu einer erhöhten Bauraumtiefe durch die in der Kulisse umlaufenden Kurvenbahnabnehmer.

Die Hebelanordnung 25 umfasst hierzu einen ersten Hebelarm 26 und einen zweiten Hebelarm 27. Der erste Hebelarm 26 erstreckt sich im Wesentlichen in radialer Richtung des Steuersterns 19 nach außen. Mit seinem einen Ende ist der erste Hebelarm 26 drehbar an dem Kurbelarm 23 angelenkt. An seinem gegenüberliegenden Ende trägt der erste Hebelarm 26 ein Paar als Kurvenbahnabnehmer 28 ausgebildete Rollen 29. Die Rollen 29 sind in Längsrichtung des ersten Hebelarmes 26 gesehen diametral an diesem um sich achsparallel zu der Haspelwelle 15 ersteckende Achsen drehbar gelagert angeordnet. Der Abstand zwischen den beiden Rollen 29 auf dem ersten Hebelarm 26 ist derart gewählt, dass die beiden Rollen 29 entsprechend ihrer Positionierung an dem ersten Hebelarm 26 stets auf der Innenseite 30 beziehungsweise auf der Außenseite 31 des jeweiligen Kurvenbahnsegmentes 21 abrollen. Der zweite Hebelarm 27 der jeweiligen Hebelanordnung 25 ist mit seinem einen Ende drehbar an dem Steuerstern 19 angelenkt. Sein anderes Ende ist an der Achse der Rolle 29 schwenkbar angelenkt, welche auf der Außenseite 31 des jeweiligen Kurvenbahnsegmentes 21 abrollt.

Im Bereich einer jeweiligen Beabstandung 22 zwischen den zumindest zwei Kurvenbahnsegmenten 21 sind jeweils ein inneres Führungselemente 32 und ein äußeres Führungselemente 33 an der Abdeckplatte 34 lösbar angeordnet. Das innere Führungselement 32 und das äußere Führungselement 33 sind dabei in radialem Abstand zu den Kurvenbahnsegmenten 21 angeordnet. Der radiale Abstand ist so gewählt, dass es gewährleistet ist, dass die beiden als Rollen 29 ausgeführten Kurvenbahnabnehmer 28 im Bereich der Beabstandung 22 zwischen den Kurvenbahnsegmenten 21, in dem die Kurvenbahnabnehmer 28 die Kurvenbahnsegmente 21 nicht berühren, stets in Kontakt mit dem inneren Führungselement 32 und dem äußeren Führungselement 33 stehen, bis beide Rollen 29 das nachfolgende Kurvenbahnsegment 21 wieder zwischen sich einschließen, um auf diesem abzurollen. Das innere Führungselement 32 und das äußere Führungselement 33 sind dabei ebenfalls als ein Flachprofil ausgeführt. Entsprechend der angestrebten Drehstellung der Zinkenträger 17 im Bereich der Beabstandung 22 sind das innere Führungselement 32 und das äußere Führungselement 33 derart geformt, dass durch die Hebelanordnung 25 eine mit dem Verlauf korrespondierende Bewegung auf den Kurbelarm 23 übertragen wird.

In Fig. 3 ist eine Detailansicht des Steuersterns 19 und der daran angeordneten Einstelleinrichtung 20 der Haspel 7 gemäß Fig. 2 dargestellt. Die Darstellung zeigt im Wesentlichen die Kurvenbahnstruktur, die von den zumindest zwei an der Abdeckplatte 34 lösbar befestigten Kurvenbahnsegmenten 21 sowie dem inneren Führungselement 32 und dem äußeren Führungselement 33 gebildet ist. Dahinter liegend sind die Hebelarmanordnungen 25 angeordnet, die sich gemeinsam mit dem Steuerstern 19 drehen. Die Drehstellung der Zinkenträger 17 und mit diesen der daran befestigten Förderzinken 18 wird durch den von den Kurvensegmenten 21 auf die Hebelanordnung 25 aufgeprägten Bewegungsablauf bestimmt. Hierzu weisen die Kurvensegmente 21 entlang ihres Umfangs abschnittsweise unterschiedliche Breiten, das heißt in radialer Richtung unterschiedliche Ausdehnungen zwischen der Innenseite und der Außenseite des jeweiligen Kurvensegmentes 21, auf.

Die jeweilige Breite eines Kurvensegmentes 21 bestimmt den Grad der Neigung des ersten Hebelarmes 26 während des Umlaufs entlang des jeweiligen Kurvenbahnsegments 21. Die Neigungsänderung des ersten Hebelarmes 26 wird von dem endseitig an dem ersten Hebelarm 26 angeordnet Kurbelarm 23 auf den mit diesem drehfest verbundenen Zinkenträger 17 übertragen, wodurch die Förderzinken 18 eines Zinkenträgers 17 während eines Umlaufes unterschiedliche Orientierung relativ zum Boden einnehmen.

Die lösbare Anordnung der Kurvenbahnsegmente 21 und der inneren und äußeren Führungselemente 32, 33 an der Abdeckplatte 34 ermöglicht eine einfache Anpassung der Bahncharakteristik an unterschiedliche Erntebedingungen durch den Austausch eines, vorzugsweise des unteren, Kurvensegmentes 21. Zudem ist diese Kurvenbahnstruktur wartungsärmer als die gemäß der EP 1 297 735 B1, da sie auf einen sich mit Erntegut zusetzenden Kanal, in welchem ein Kurvenbahnabnehmer geführt ist, verzichtet.

**Bezugszeichenliste**

| | | | |
|---|---|---|---|
| 1 | Mähdrescher | 30 | Innenseite von 21 |
| 2 | Arbeitsmaschine | 31 | Außenseite von 21 |
| 3 | Einzugsschacht | 32 | Inneres Führungselement |
| 4 | Schneidwerk | 33 | Äußeres Führungselement |
| 5 | Erntegutbergungseinrichtung | 34 | Abdeckplatte |
| 6 | Schneidtisch | | |
| 7 | Haspel | | |
| 8 | Erntegut | | |
| 9 | Mähbalken | | |
| 10 | Erntegut | | |
| 11 | Einzugsschnecke | | |
| 12 | Schrägförderer | | |
| 13 | Dreschwerk | | |
| 14 | Tragarm | | |
| 15 | Haspelwelle | | |
| 16 | Tragstern | | |
| 17 | Zinkenträger | | |
| 18 | Förderzinken | | |
| 19 | Steuerstern | | |
| 20 | Einstellvorrichtung | | |
| 21 | Kurvenbahnsegment | | |
| 22 | Beabstandung | | |
| 23 | Kurbelarm | | |
| 24 | Achse | | |
| 25 | Hebelanordnung | | |
| 26 | Erste Hebelarm | | |
| 27 | Zweite Hebelarm | | |
| 28 | Kurvenbahnabnehmer | | |
| 29 | Rolle | | |

## Patentansprüche

1. Erntegutbergungseinrichtung (5) mit zumindest einer rotierend angetriebenen Haspel (7), welche mehrere auf einer Haspelwelle (15) mit Abstand zueinander angeordnete Tragsterne (16) sowie sich über die Breite der Haspel (7) erstreckende drehbare Zinkenträger (17) aufweist, die Förderzinken (18) tragen, und mit einer Einstellvorrichtung (20), mit der die Drehstellung der Zinkenträger (17) in Abhängigkeit von der Drehstellung der Haspel (7) einstellbar ist, wobei die Einstellvorrichtung (20) eine zumindest aus zwei Kurvenbahnsegmenten (21) bestehende, abschnittsweise offene Kurvenbahnstruktur umfasst, mittels der die Drehstellung des Zinkenträgers (17) steuernde Kurvenbahnabnehmer (28) geführt sind, wobei zumindest eines der Kurvenbahnsegmente (21) lösbar angeordnet ist, **dadurch gekennzeichnet, dass** die zumindest zwei Kurvenbahnsegmente (21) in Umfangsrichtung der Kurvenbahnstruktur zumindest eine die Kurvenbahnstruktur unterbrechende Beabstandung (22) zueinander aufweisen.

2. Erntegutbergungseinrichtung (5) nach Anspruch 1, **dadurch gekennzeichnet, dass** die zumindest zwei Kurvenbahnsegmente (21) jeweils als ein Flachprofil ausgeführt sind, wobei Innenseite (30) und Außenseite (31) des jeweiligen Kurvenbahnsegmentes (21) der Führung der Kurvenbahnabnehmer (28) dienen.

3. Erntegutbergungseinrichtung (5) nach Anspruch 2, **dadurch gekennzeichnet, dass** der eine Kurvenbahnabnehmer (28) auf der Innenseite (30) des jeweiligen Kurvenbahnsegmentes (21) umläuft und der andere Kurvenbahnabnehmer (28) auf der Außenseite (31) des jeweiligen Kurvenbahnsegmentes (21).

4. Erntegutbergungseinrichtung (5) nach einem der Ansprüche 1 bis 3, **dadurch gekennzeichnet, dass** im Bereich einer Beabstandung (22) zweier Kurvenbahnsegmente (21) jeweils paarweise, in radialem Abstand zu den Kurvenbahnsegmenten (21) angeordnete innere Führungselemente (32) und äußere Führungselemente (33) vorgesehen sind.

5. Erntegutbergungseinrichtung (5) nach Anspruch 4, **dadurch gekennzeichnet, dass** die inneren Führungselemente (32) und die äußeren Führungselemente (33) in Umfangsrichtung eine Erstreckung aufweisen, die größer ist, als die Beabstandung (22) zwischen zwei Kurvenbahnsegmenten (21).

6. Erntegutbergungseinrichtung (5) nach einem der Ansprüche 1 bis 5, **dadurch gekennzeichnet, dass** die Kurvenbahnabnehmer (28) an einer Hebelanordnung (25) angeordnet sind, die an dem Tragstern (16) schwenkbar gelagert ist.

7. Erntegutbergungseinrichtung (5) nach Anspruch 6, **dadurch gekennzeichnet, dass** die Hebelanordnung 25() einen ersten Hebelarm (26) umfasst, welcher mittels der an diesem angeordneten Kurvenbahnabnehmern (28) entlang der Kurvenbahnsegmente (21) geführt ist.

8. Erntegutbergungseinrichtung (5) nach einem der Ansprüche 1 bis 7, **dadurch gekennzeichnet, dass** die Kurvenbahnabnehmer (28) als zwei Rollen (29) ausgebildet sind, die in Längsrichtung des ersten Hebelarmes (26) gesehen diametral an diesem angeordnet sind.

9. Erntegutbergungseinrichtung (5) nach Anspruch 8, **dadurch gekennzeichnet, dass** die eine Rolle (29) auf der Innenseite (30) des jeweiligen Kurvenbahnsegmentes (21) umläuft und die andere Rolle (29) auf der Außenseite (31) des jeweiligen Kurvenbahnsegmentes (21).

10. Erntegutbergungseinrichtung (5) nach einem der Ansprüche 6 bis 9, **dadurch gekennzeichnet, dass** die Hebelanordnung (25) einen zweiten Hebelarm (26) umfasst, welcher mit einem Ende an dem Steuerstern (19) schwenkbar angelenkt ist und mit seinem anderen Ende an dem ersten Hebelarm (26).

11. Erntegutbergungseinrichtung (5) nach einem der Ansprüche 4 bis 10, **dadurch gekennzeichnet, dass** die radiale Beabstandung der inneren Führungselemente (32) und der äußeren Führungselemente (33) zumindest dem Abstand der diametral angeordneten Rollen (29) entspricht.

12. Erntegutbergungseinrichtung (5) nach einem der Ansprüche 6 bis 11, **dadurch gekennzeichnet, dass** ein Kurbelarm (23) vorgesehen ist, welcher mit einem Ende an einem freien Ende des ersten Hebelarmes (26) schwenkbar angelenkt ist und mit seinem anderen Ende mit dem Zinkenträger (17) drehfest verbunden ist.

## Claims

1. A crop harvesting device (5) having at least one rotatably driven reel (7) having a plurality of carrier stars (16) arranged in mutually spaced relationship on a reel shaft (15) and rotatable tine carriers (17) which extend over the width of the reel (7) and carry conveyor tines (18), and an adjusting device (20) with which the rotational position of the tine carriers (17) is adjustable in dependence on the rotational position of the reel (7), wherein the adjusting device (20) includes a cam track structure which is portion-wise open and which comprises at least two cam track segments (21) and by means of which cam track followers (28) controlling the rotational position of the tine carrier (17) are guided, wherein at least one of the cam track segments (21) is arranged releasably, **characterised in that** the at least two cam track segments (21) in the peripheral direction of the cam track structure have at least one spacing (22) interrupting the cam track structure relative to each other.

2. A crop harvesting device (5) according to claim 1 **characterised in that** the at least two cam track segments (21) are respectively in the form of a flat profile, wherein the inward side (30) and the outward side (31) of the respective cam track segments (21) serve to guide the cam track followers (28).

3. A crop harvesting device (5) according to claim 2 **characterised in that** the one cam track follower (28) circulates on the inward side (30) of the respective cam track segment (21) and the other cam track follower (28) circulates on the outward side (31) of the respective cam track segment (21).

4. A crop harvesting device (5) according to one of claims 1 to 3 **characterised in that** there are provided inner guide elements (32) and outer guide elements (33) arranged in a region of a spacing (22) of two cam track segments (21) in respective pair relationship and at a radial spacing relative to the cam track segments (21).

5. A crop harvesting device (5) according to claim 4 **characterised in that** the inner guide elements (32) and the outer guide elements (33) have in the peripheral direction an extent which is greater than the spacing (22) between two cam track segments (21).

6. A crop harvesting device (5) according to one of claims 1 to 5 **characterised in that** the cam track followers (28) are arranged on a lever arrangement (25) mounted pivotably to the carrier star (16).

7. A crop harvesting device (5) according to claim 6 **characterised in that** the lever arrangement (25) has a first lever arm (26) which is guided along the cam track segments (21) by means of the cam track followers (28) arranged on the lever arm.

8. A crop harvesting device (5) according to one of claims 1 to 7 **characterised in that** the cam track followers (28) are in the form of two rollers (29) which are arranged diametrally on the first lever arm (26) as viewed in the longitudinal direction of the lever arm.

9. A crop harvesting device (5) according to claim 8 **characterised in that** the one roller (29) circulates on the inward side (30) of the respective cam track segment (21) and the other roller (29) circulates on the outward side (31) of the respective cam track segment (21).

10. A crop harvesting device (5) according to one of claims 6 to 9 **characterised in that** the lever arrangement (25) includes a second lever arm (26) which is pivotably connected with one end to the control star (19) and with its other end to the first lever arm (26).

11. A crop harvesting device (5) according to one of claims 4 to 10 **characterised in that** the radial spacing of the inner guide elements (32) and the outer guide elements (33) corresponds at least to the spacing of the diametrally arranged rollers (29).

12. A crop harvesting device (5) according to one of claims 6 to 11 **characterised in that** there is provided a crank arm (23) which is pivotably connected with one end to a free end of the first lever arm (26) and is non-rotatably connected with its other end to the tine carrier (17).

## Revendications

1. Équipement de ramassage de produit de récolte (5) comprenant au moins un rabatteur entraîné en rotation (7), qui comporte plusieurs étoiles porteuses (16) disposées à distance les unes des autres sur un arbre de rabatteur (15) ainsi que des barres porte-dents tournantes (17) qui s'étendent sur la largeur du rabatteur (7) et qui portent des dents d'alimentation (18), et comprenant un dispositif de réglage (20) par l'intermédiaire duquel la position de rotation des barres porte-dents (17) peut être réglée en fonction de la position de rotation du rabatteur (7), le dispositif de réglage (20) incluant une structure de came ouverte par endroits, constituée d'au moins deux segments de cames (21), au moyen de laquelle sont guidés des palpeurs de cames (28) commandant la position de rotation de la barre porte-dents (17), au moins un des segments de cames (21) étant monté de façon amovible, **caractérisé en ce que** les au moins deux segments de cames (21) présentent l'un par rapport à l'autre, dans la direction circonférentielle de la structure de came, au moins un intervalle (22) qui interrompt la structure de came.

2. Équipement de ramassage de produit de récolte (5) selon la revendication 1, **caractérisé en ce que** les au moins deux segments de cames (21) sont conçus respectivement sous la forme d'un profilé plat, le côté intérieur (30) et le côté extérieur (31) du segment de came respectif (21) servant au guidage des palpeurs de cames (28).

3. Équipement de ramassage de produit de récolte (5) selon la revendication 2, **caractérisé en ce que** le palpeur de came (28) circule sur le côté intérieur (30) du segment de came respectif (21) et l'autre palpeur de came (28) circule sur le côté extérieur (31) du segment de came respectif (21).

4. Équipement de ramassage de produit de récolte (5) selon une des revendications 1 à 3, **caractérisé en ce que** dans la zone d'un intervalle (22) de deux segments de cames sont prévus des éléments de guidage intérieurs (32) et des éléments de guidage extérieurs (33) disposés respectivement par paires à distance radiale des segments de cames (21).

5. Équipement de ramassage de produit de récolte (5) selon la revendication 4, **caractérisé en ce que** les éléments de guidage intérieurs (32) et les éléments de guidage extérieurs (33) présentent dans la direction circonférentielle une extension qui est supérieure à l'intervalle (22) entre deux segments de cames (21).

6. Équipement de ramassage de produit de récolte (5) selon une des revendications 1 à 5, **caractérisé en ce que** les palpeurs de cames (28) sont disposés sur un agencement de leviers (25) qui est monté pivotant sur l'étoile porteuse (16).

7. Équipement de ramassage de produit de récolte (5) selon la revendication 6, **caractérisé en ce que** l'agencement de leviers (25) comprend un premier bras de levier (26) qui est guidé le long des segments de cames (21) au moyen des palpeurs de cames (28) disposés sur celui-ci.

8. Équipement de ramassage de produit de récolte (5) selon une des revendications 1 à 7, **caractérisé en ce que** les palpeurs de cames (28) sont conçus sous la forme de deux galets (29) qui, par rapport à l'orientation longitudinale de premier bras de levier (26), sont disposés diamétralement sur celui-ci.

9. Équipement de ramassage de produit de récolte (5) selon la revendication 8, **caractérisé en ce que** l'un des galets (29) circule sur le côté intérieur (30) du segment de came respectif (21) et l'autre galet (29) circule sur le côté extérieur (31) du segment de came respectif (21).

10. Équipement de ramassage de produit de récolte (5) selon une des revendications 6 à 9, **caractérisé en ce que** l'agencement de leviers (25) comprend un second bras de levier (26) qui est articulé de manière pivotante, par une extrémité, sur l'étoile de commande (19) et, par son autre extrémité, sur le premier bras de levier (26).

11. Équipement de ramassage de produit de récolte (5) selon une des revendications 4 à 10, **caractérisé en ce que** l'intervalle radial des éléments de guidage intérieurs (32) et des éléments de guidage extérieurs (33) correspond au moins à l'écartement des galets disposés diamétralement (29).

12. Équipement de ramassage de produit de récolte (5) selon une des revendications 6 à 11, **caractérisé en ce qu'**est prévue une manivelle (23) qui, par une extrémité, est articulée de manière pivotante sur une extrémité libre du premier bras de levier (26) et, par son autre extrémité, est solidarisé en rotation avec la barre porte-dents (17).
